(19) Europäisches Patentamt
European Patent Office
Office européen des brevets

(11) **EP 2 500 701 B1**

(12) **FASCICULE DE BREVET EUROPEEN**

(45) Date de publication et mention
de la délivrance du brevet:
**17.02.2021 Bulletin 2021/07**

(21) Numéro de dépôt: **12159489.9**

(22) Date de dépôt: **14.03.2012**

(51) Int Cl.:
***G01J 3/453*** (2006.01)   ***G01B 9/02*** (2006.01)

(54) **Système et procédé de métrologie appliqué à un interféromètre d'analyse à distance d'un composé gazeux**

Messsystem und -verfahren, das bei einem Interferometer zur Fernanalyse eines gasförmigen Bestandteils angewandt wird

Metrology system and method applied to an interferometer for remote analysis of a gaseous compound

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2011 FR 1100801**

(43) Date de publication de la demande:
**19.09.2012 Bulletin 2012/38**

(73) Titulaire: **Thales**
**92400 Courbevoie (FR)**

(72) Inventeurs:
• **Gaucel, Jean-Michel**
  **06210 Mandelieu la Napoule (FR)**
• **Miras, Didier**
  **06210 Mandelieu la Napoule (FR)**

(74) Mandataire: **Marks & Clerk France**
**Immeuble "Visium"**
**22, avenue Aristide Briand**
**94117 Arcueil Cedex (FR)**

(56) Documents cités:
**US-A- 4 444 501    US-A- 5 657 122**

**Description**

La présente invention appartient au domaine de l'interférométrie par transformée de Fourier et concerne en particulier un dispositif et un procédé d'amélioration de la précision d'un tel dispositif pour l'analyse à distance d'un composé gazeux. La présente invention s'applique notamment aux interféromètres à transformée de Fourier imageurs.

Des instruments d'analyse chimique et physique d'un composé gazeux à distance permettent de réaliser des sondages de couches atmosphériques. Un instrument d'analyse chimique et physique d'un composé gazeux peut trouver une application dans les domaines de la météorologie, de l'analyse de polluants atmosphériques. La présente invention peut être appliquée à un interféromètre de type Michelson et de manière générale à des interféromètres à deux bras utilisant des rétro-réflecteurs, par exemple des coins de cube.

Pour ces instruments, afin de satisfaire les besoins scientifiques, il est nécessaire d'assurer une précision de métrologie de l'ordre du nanomètre. La métrologie permet de relier une acquisition en un point de mesure à une différence de marche optique. Or, avec les systèmes de métrologie standard, tout déplacement non désiré de l'élément mobile, conduit à des erreurs sur la métrologie. A un tel niveau de précision, une des conséquences est que les contraintes sur le mécanisme de déplacement de l'élément mobile deviennent très fortes.

A ces besoins en termes de métrologie, viennent s'ajouter un souhait de diminution de la résolution spectrale de la mesure qui conduit mécaniquement à augmenter la course des rétro-réflecteurs mobiles et augmente d'autant la difficulté de réalisation du mécanisme.

Un autre besoin peut être une augmentation du champ de vue dans l'interféromètre. Le champ de vue est l'angle solide sous lequel est vue le composant gazeux à analyser. Cette augmentation du champ augmente la sensibilité de la métrologie vis à vis de la maîtrise de la trajectoire de l'élément mobile.

Egalement, l'utilisation d'un spectromètre à transformée de Fourier imageur avec des pixels petits augmente considérablement, notamment au centuple, cette sensibilité de la métrologie.

Egalement, dans le but de réduire les coûts, le volume, la masse et la puissance consommée de l'interféromètre, une acquisition unilatérale, c'est à dire une restriction de l'acquisition aux différences de marche optique positives, peut être préférée. Même si elle réduit quasiment de moitié la course de l'élément mobile, l'acquisition unilatérale augmente encore considérablement la sensibilité de la métrologie à la maîtrise de la trajectoire du ou des réflecteurs mobiles.

Une des conséquences est que le ou les mécanismes de déplacement de l'élément mobile se trouvent sur-contraints par rapport à ceux des interféromètres des générations précédentes. Au pire cette accumulation de contraintes mécaniques mène à une impossibilité de réalisation, au mieux elle augmente considérablement les coûts de conception de l'interféromètre avec l'impossibilité de réutiliser les mécanismes des anciennes générations, voir même, la remise en cause de l'ensemble de l'interféromètre utilisé dans les générations précédentes.

Il est connu notamment du document US 5 657 122, d'injecter trois faisceaux laser dans une portion centrale de l'interféromètre et d'utiliser un dispositif d'asservissement pour stabiliser l'alignement d'un miroir mobile. Cependant ce dispositif ne peut être utilisé que lorsque les miroirs mobiles sont plans et a une précision insuffisante due à la bande passante de l'asservissement et au retard introduit par le traitement des données et l'activation des actuateurs.

Cette métrologie de précision est actuellement résolue par une injection d'un signal laser ayant une longueur d'onde absolue très stable dans l'interféromètre. Cette injection est généralement faite au centre du champ du vue car cette position permet d'avoir une longueur d'onde apparente stable vis à vis de l'injection laser. La mesure des interférences du signal laser en sortie de l'interféromètre permet de relier l'instant de mesure à une différence de marche optique, créant ainsi un signal de métrologie. Théoriquement, si le déplacement de l'élément mobile est suffisamment proche de la commande, une métrologie au centre du champ de vue peut être utilisée dans tout le champ. Néanmoins, cette unique mesure au centre du champ n'est plus valable pour des points éloignés du centre du champ, dès lors que les contraintes sur le mécanisme de déplacement de l'élément mobile ne peuvent plus être satisfaites.

Une première solution peut être d'utiliser un laser de métrologie par point de mesure, c'est-à-dire par pixel de la matrice, ou capteur, d'acquisition. Même si cette première solution offre les précisions souhaitées, elle devient irréalisable avec un grand nombre de points de mesure.

Une deuxième solution utilise une interpolation dans le champ de vue d'un nombre K, supérieur à trois, de mesures lasers. Cette solution demande un traitement numérique complexe afin d'obtenir la précision requise. De plus cette solution comme la première ne permettent pas d'avoir une longueur d'onde apparente suffisamment stable afin de décorréler une erreur d'injection laser, d'un bougé de l'axe interférométrique. La position de l'axe interférométrique est en effet un paramètre nécessaire à la calibration spectrale des données.

Une troisième solution utilisant une mesure directe de la position de l'élément mobile est une solution complexe à mettre en œuvre et ne permet pas d'obtenir des mesures en temps réel.

Un but de l'invention est notamment de pallier les inconvénients précités. A cet effet, l'invention a pour objet un système de métrologie selon la revendication 1.

Dans un mode de réalisation particulièrement avantageux, un des trois faisceaux laser est injecté au centre du champ de vue de l'interféromètre.

L'unité de calcul de métrologie peut effectuer le traitement suivant

- correction du signal laser : correction des différences d'amplitudes, de phase, et d'offset, offset signifiant décalage en langage anglo-saxon.

L'invention a également pour objet un procédé de métrologie selon la revendication 4.

Avantageusement, un des trois faisceaux laser peut être injecté au centre du champ de vue de l'interféromètre.

Le calcul d'un signal de métrologie brut peut comporter le traitement suivant

- correction du signal laser : correction des différences d'amplitudes, de phase, et d'offset, offset signifiant décalage en langage anglo-saxon ;

Un des principaux avantages de l'invention est de fournir une métrologie apte à estimer et intégrer la trajectoire dans l'espace imparfaite des éléments mobiles de l'interféromètre dans la mesure réalisée par l'interféromètre.

D'autres caractéristiques et avantages de l'invention apparaîtront à l'aide de la description qui suit, donnée à titre illustratif et non limitatif, et faite en regard des dessins annexés qui représentent :

- la figure 1 : de manière schématique un premier interféromètre de Michelson à coins de cube, dont un coin de cube est mobile ;
- la figure 2 : de manière schématique un deuxième interféromètre à coins de cube, dont les deux coins de cube sont mobiles ;
- la figure 3 : de manière schématique le premier interféromètre avec une lame compensatrice déporté par rapport à la lame séparatrice ;
- la figure 4 : de manière schématique le premier interféromètre équipé d'un système de métrologie selon l'invention ;
- la figure 5 : de manière schématique un exemple de disposition des rayons laser du dispositif de métrologie selon l'invention ;
- la figure 6 : de manière schématique le dispositif de mesure selon l'invention ;
- la figure 7 : différentes étapes du procédé de mesure selon l'invention ;
- la figure 8 : différentes étapes du traitement de métrologie du procédé de mesure selon l'invention ;

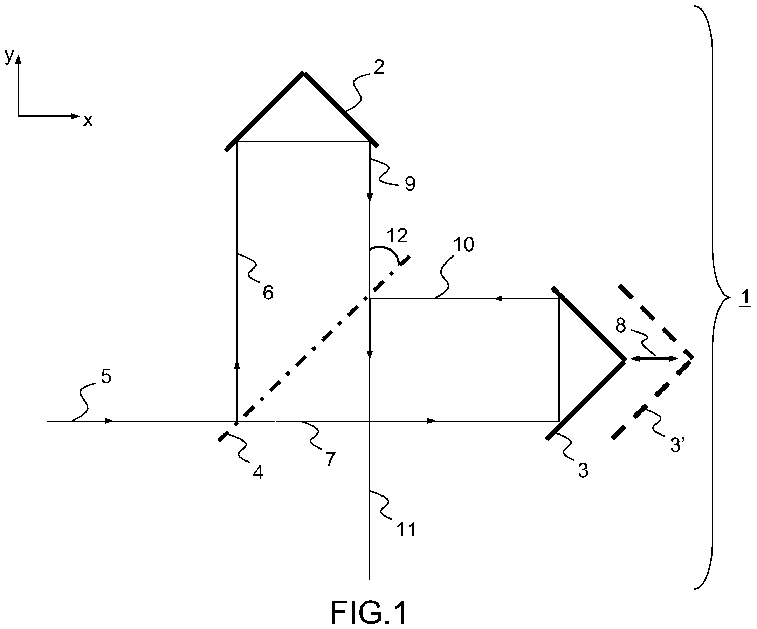

La figure 1 représente de manière schématique un premier interféromètre de Michelson 1 selon l'état de la technique. L'interféromètre représenté sur la figure 1 comporte un premier rétro-réflecteur mobile 3. Le premier interféromètre comporte notamment une lame séparatrice/compensatrice 4. La lame séparatrice/compensatrice 4 permet notamment de diviser un faisceau entrant 5 en deux faisceaux 6, 7 : un premier faisceau 6 peut être renvoyé par un deuxième retro-réflecteur 2 tandis qu'un deuxième faisceau 7 peut être renvoyé par le premier rétro-réflecteur mobile 3. Les premier et deuxième rétro-réflecteurs 2, 3 peuvent être des coins de cube. Le premier retro-réflecteur mobile 3 peut se déplacer linéairement, par exemple selon un premier axe 8 sensiblement parallèle au faisceau entrant 5. Le premier axe 8 permet de définir un deuxième axe x, et un troisième axe y sensiblement perpendiculaire au deuxième axe x. Un plan, défini par le deuxième et le troisième axe x,y, peut être un plan (x,y) dans lequel se trouvent le premier et le deuxième retro-réflecteur 3, 2. Une position 3' représente un exemple d'une deuxième position du premier rétro-réflecteur 3 après un déplacement de celui-ci. Les premier et deuxième faisceaux 6, 7 sont réfléchis respectivement par les deuxième et premier rétro-réflecteurs 2, 3, respectivement sous la forme d'un troisième et d'un quatrième faisceau 9, 10. Les troisième et quatrième faisceaux 9, 10 sont ensuite recombinés par la lame séparatrice/compensatrice 4, sous la forme d'un faisceau sortant 11. L'angle d'incidence moyen 12 du premier interféromètre 1 est notamment un angle trigonométrique entre la lame séparatrice/compensatrice 4 et le cinquième faisceau 9. L'angle d'incidence moyen 12 peut être compris entre vingt degrés et quarante cinq degrés. Sur la figure 1, l'angle d'incidence moyen 12 est de l'ordre de quarante cinq degrés.

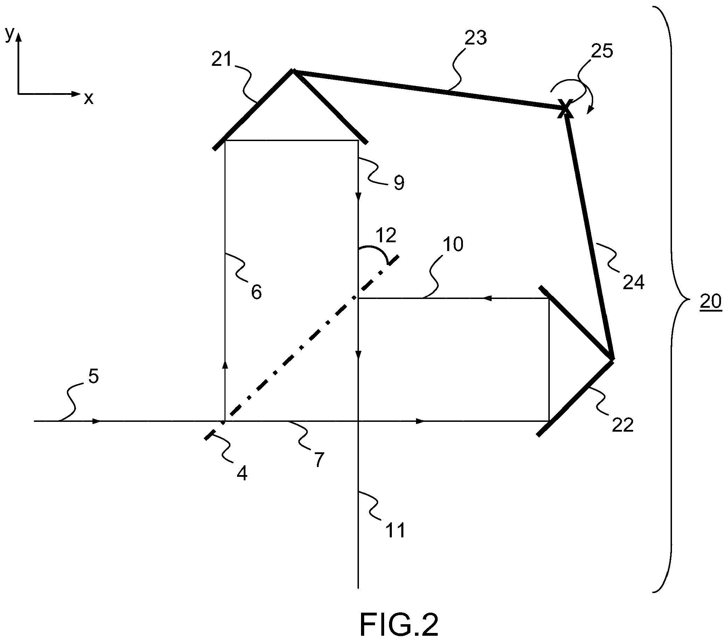

La figure 2 représente de manière schématique un deuxième interféromètre 20 à rétro-réflecteurs mobiles 21, 22 selon l'état de la technique. Le deuxième interféromètre 20 est dit à mouvement « de double pendule ». En effet, les troisième et quatrième rétro-réflecteurs mobiles 21, 22 peuvent chacun être reliés mécaniquement à une première extrémité d'une tige 23, 24 par exemple rigide. Les deux tiges 23, 24 sont reliées l'une à l'autre par une liaison 25 de leur deuxième extrémité. La liaison 25 peut s'effectuer de manière à ce que les tiges 23, 24 puissent tourner autour de la liaison 25. La liaison 25 peut donc être un axe de rotation pour les tiges 23, 24. La liaison 25 peut se situer notamment dans le prolongement de la lame séparatrice/compensatrice 4. La rotation des tiges 23, 24 peut notamment se faire dans un plan défini par le troisième et le quatrième réflecteur 21, 22 du deuxième interféromètre 20. L'angle entre les deux tiges 23, 24 peut notamment être fixé. Fonctionnellement, les faisceaux 5, 6, 7, 10, 11 représentés sur la figure 2 sont les mêmes que les faisceaux 5, 6, 7, 10, 11 représentés sur la figure 1. L'angle 12 représente comme sur la figure 1 l'angle d'incidence moyen.

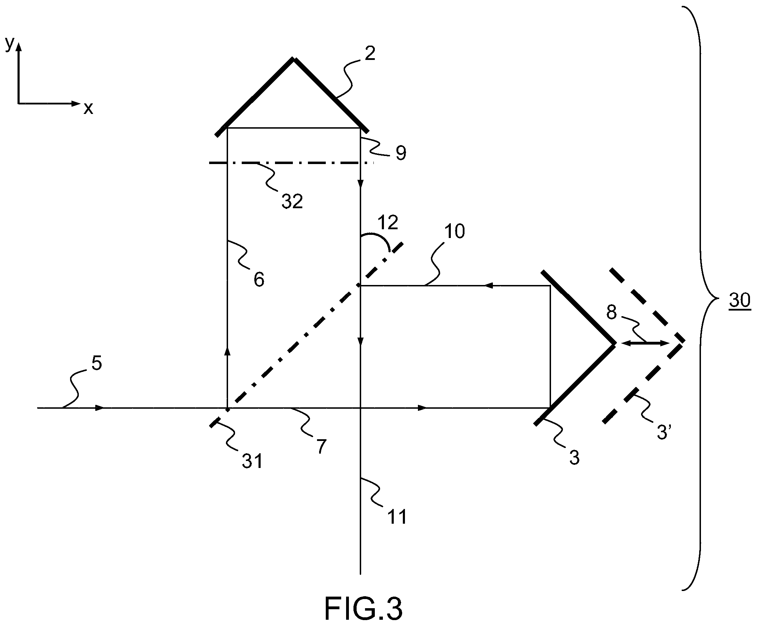

La figure 3 représente de manière schématique un troisième interféromètre 30 selon l'état de la technique. Le troisième interféromètre 30 comprend une lame séparatrice 31 et une lame compensatrice déportée 32. Par exemple, tel que représenté sur la figure 3, la lame compensatrice déportée 32 peut s'intégrer à un interféromètre comme le premier interféromètre 1. La lame compensatrice 32 peut être déportée devant le deuxième rétro-réflecteur 2, de manière à être traversée de manière sensiblement perpendiculaire par les premier et troisième faisceaux 6, 9. Dans le troisième interféromètre 30, les différents composants 2, 3, 31, 32, sont situés dans le même plan (x, y) tel que représenté sur la figure 1. Fonctionnellement, les faisceaux 5, 6, 7, 10, 11 représentés sur la figure 3 sont les mêmes que les faisceaux 5, 6, 7, 10, 11 représentés sur la figure 1.

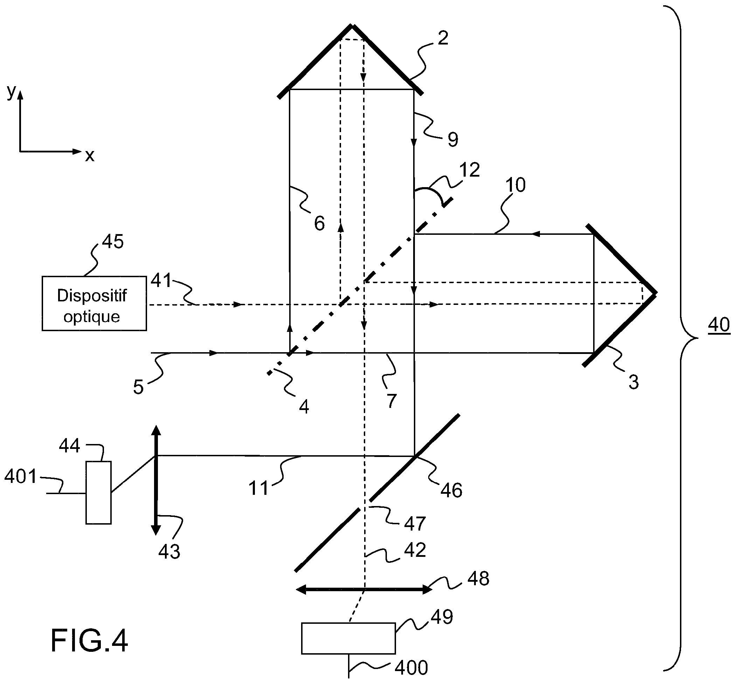

La figure 4 représente de manière schématique un quatrième interféromètre 40 comportant un système de métrologie selon l'invention. Le quatrième interféromètre 40 représenté sur la figure 4 reprend les principes de fonctionnement du premier interféromètre 1, représenté sur la figure 1. Avantageusement, le système de métrologie selon l'invention peut également s'appliquer à différents interféromètres à deux bras utilisant des rétroprojecteurs et notamment, le deuxième et troisième interféromètre 20, 30 représentés respectivement sur la figure 2 et sur la figure 3. D'autres exemples d'interféromètres auxquels peut être appliquée l'invention sont notamment décrits dans l'ouvrage suivant : FOURIER TRANSFORM INFRARED SPECTROMETRY Second Edition - 2007, Editeur : John Wiley and Sons, Auteurs : Peter R. Griffiths et James A. de Haseth, § 5.2 tilt-compensated interferometers p.112 à 123.

Un des principes de l'invention est d'utiliser un petit nombre k, supérieur ou égale à trois, faisceaux laser 41 de métrologie répartis dans le champ de vue, afin de mesurer et d'intégrer dans l'espace, les déplacements relatifs entre les premier et deuxième rétro-réflecteurs 3, 2. Les faisceaux laser 41 sont représentés sur la figure 4 par un tracé rayon 41. Les faisceaux laser 41 peuvent former un trièdre si, par exemple ils sont au nombre de trois.

Un dispositif optique 45, ou sous-système d'injection de faisceaux laser 45, permet d'injecter les k faisceaux laser 41 dans le quatrième interféromètre 40. Lors de son trajet dans l'interféromètre chaque faisceau laser 41 peut notamment traverser une lame à lambda sur quatre, ou lame quart d'onde, où lambda est la longueur d'onde du laser, permettant d'obtenir à l'aide d'un séparateur de polarisation, deux signaux laser 42 en quadratures par faisceau laser 41, en sortie de l'interféromètre 40. Sur la figure 4 et pour l'exemple, les k faisceaux laser 41 sont injectés dans la même direction que le faisceau entrant 5. Dans un autre mode de réalisation, les k faisceaux optiques 41 peuvent être injectés dans le quatrième interféromètre 40 selon la direction du premier faisceau 6, par exemple, en fonction de contraintes d'aménagement auquel l'instrument de mesure 40 est soumis. Un miroir de renvoi 46, percé de petits trous 47, peut réaliser une séparation en sortie de l'interféromètre entre le faisceau science sortant 11 et le faisceau de métrologie 42 sortant du quatrième interféromètre 40. Le faisceau science sortant 11 peut être formé de l'ensemble des rayons optiques entrant dans l'instrument de mesure, provenant d'un composant gazeux à analyser, et ayant traversés le quatrième interféromètre 40. Une première lentille convergente 43 peut faire converger le faisceau science 11 vers un sous-système de détection ou d'acquisition principal 44. Le sous-système de détection principal 44 fournit en sortie des interférogrammes, ou signaux sciences 401. Un signal science représente une information analogique ou numérique issue d'une acquisition à des points de mesure dans le champ de vue du quatrième interféromètre 40. Une deuxième lentille convergente 48 peut faire converger le faisceau de métrologie 42 vers un sous-système détection secondaire 49. La lentille convergente 48 et le sous-système de détection secondaire 49 font parties d'un sous système d'acquisition de faisceaux laser de métrologie, appelé par la suite sous-système de métrologie. Le sous-système de détection secondaire 49 fourni en sortie k signaux laser 400.

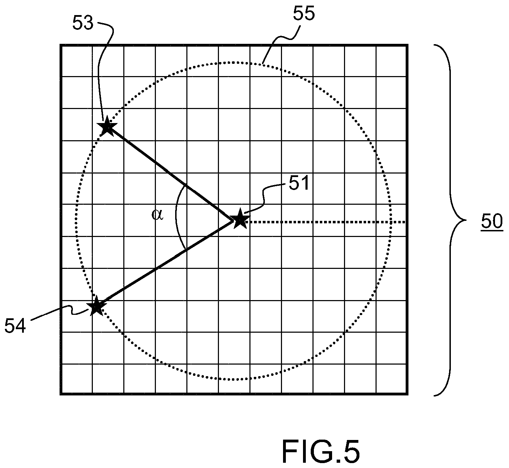

La figure 5 représente un exemple d'injection dans le quatrième interféromètre 40, pour k valant trois, des trois faisceaux laser 41 dans le champ de vue observé par l'interféromètre. Chaque position d'injection dans le champ de vue correspond à une unique direction de faisceau. Par exemple la direction des faisceaux laser 41 sur la figure 4 correspond à une injection au centre du champ de vue. Le champ de vue observé par le quatrième interféromètre 40 peut être un échantillon de l'espace dont on désire analyser le contenu gazeux. Le champ observé est mesuré en différents points de mesure, lesdits points de mesure peuvent être, par exemple, disposés suivant une matrice d'acquisition 50, représentée sur la figure 5.

Un faisceau laser 51 est dit injecté sur l'axe interférométrique. Par exemple sur les figures 1, 2, 3 et 4, cela revient à injecter le faisceau laser 51 selon le premier axe x. Un faisceau laser, injecté suivant l'axe interférométrique, a une longueur d'onde apparente stable vis à vis des erreurs d'injections.

Ensuite il est nécessaire d'adjoindre au moins deux autres faisceaux lasers au premier faisceau laser 51, de sorte que l'ensemble des positions d'injection dans le champ de vue de tous les lasers ne soit pas aligné. Par exemple un deuxième et un troisième faisceau laser 53, 54 peuvent appartenir à un cercle 55 de rayon sensiblement égal au champ observé. L'équidistance entre le premier faisceau 51 et les deuxième et troisième faisceaux laser 53, 54 permet de ne privilégier aucune direction particulière, mais ce n'est pas une condition absolument nécessaire. Avantageusement plus les positions d'injection des lasers sont éloignées les unes des autres, plus les performances du dispositif de métrologie selon l'invention, sont bonnes. Le deuxième et le troisième faisceau laser 53, 54 peuvent être disposés de manière à ce qu'il y ait un angle $\alpha$ de l'ordre de soixante degrés entre un premier segment 55 joignant le premier faisceau laser 51 et le deuxième faisceau laser 53, et un deuxième segment reliant le premier faisceau laser 51 et le troisième faisceau laser 54. L'angle $\alpha$ représenté sur la figure 5 est cité à titre d'exemple, d'autres angles peuvent être utilisés selon l'application, comme par exemple quatre vingt dix degrés ou un angle de cent vingt degrés. Avantageusement, pouvoir spécifier un angle particulier permet d'améliorer les performances du dispositif selon l'invention en fonction de ses différentes applications.

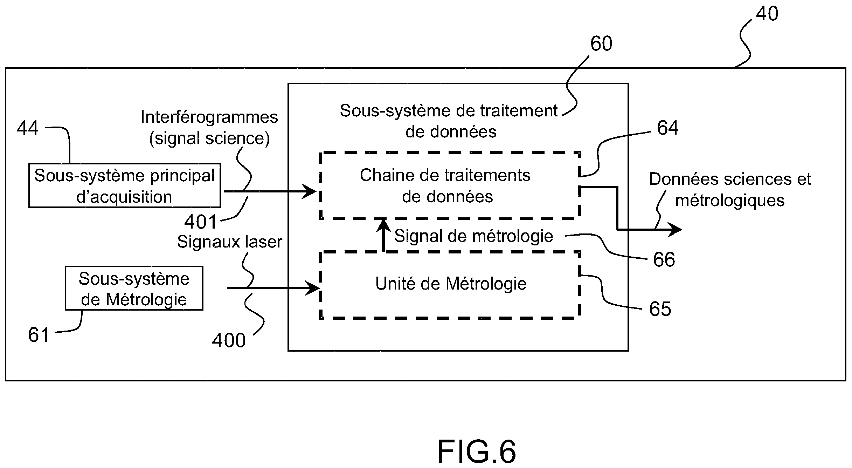

La figure 6 représente un sous-système de traitement de données 60 selon l'invention. Le sous-système de traitement de données 60 peut faire partie d'un quatrième interféromètre 40 à deux bras utilisant des rétro-réflecteurs tel que décrit ci-avant. Le sous-système de traitement de données 60 permet de traiter des données de mesure provenant notamment d'un sous-système d'acquisition de faisceaux laser de métrologie 61. Le sous-système d'acquisition de faisceaux laser de métrologie 61 comporte notamment la lentille convergente 48 et le sous-système de détection secondaire 49, tel que représentés sur la figure 4. Le sous-système de traitement de données 60 permet en outre de traiter des données de mesure 401 provenant d'un sous-système principal d'acquisition de données sciences 44, tel que représenté sur la figure 4. Le sous-système de métrologie 61, le sous-système principal d'acquisition 44 sont notamment des sorties de mesures.

Le sous-système principal d'acquisition 44 fournit notamment des interférogrammes sciences 401 à étudier, à une chaine de traitements de données 64 faisant partie du sous-système de traitement de données 60. De manière générale, un interférogramme est une mesure d'interférence entre deux ondes.

Le sous-système de métrologie 61 transmet à une unité de métrologie 65 des signaux laser 400 représentant la mesure d'interférence de chaque faisceau laser 51, 53, 54, tels que représentés par exemple sur la figure 5, après leur passage dans le l'interféromètre 40. A l'aide des signaux laser 400, l'unité de métrologie 65 génère k signaux de métrologie 66, représentant chacun une différence de marche optique de référence. La différence de marche optique de référence peut être transmise à la chaîne de traitements de données 64. La chaine de traitement de données 64, après prétraitement, fournit en sortie des données sciences prétraitées à fournir aux utilisateurs du quatrième interféromètre 40, ainsi que les données métrologiques.

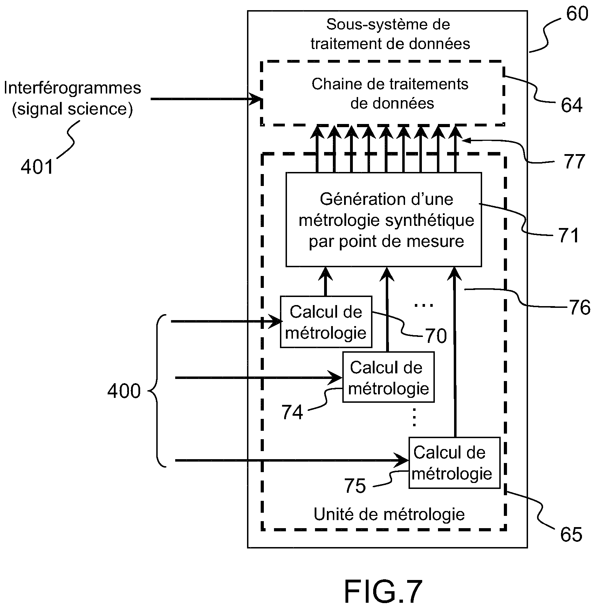

La figure 7 représente de manière schématique plusieurs des étapes du procédé de métrologie selon l'invention. La figure 7 représente notamment plus en détail l'unité de métrologie 65, le sous-système de traitement de données 60 ainsi que les traitements réalisés.

En entrée de l'unité de métrologie 65, arrivent k signaux laser représentant chacun les interférences de chaque faisceau laser injecté dans le quatrième interféromètre 40, mesurés après passage des faisceaux laser 41 dans le quatrième interféromètre 40.

Chaque signal laser est pris en compte par une unité de calcul de métrologie 70, 74, 75 appartenant à l'unité de métrologie 65. Les traitements réalisés par chaque unité de calcul de métrologie 70, 74, 75 sont indépendants les uns des autres et détaillés par la suite.

Les k unités de calcul de métrologie 70, 74, 75 génèrent k signaux de métrologie bruts 76, c'est-à-dire k signaux de métrologie estimés pour k points distincts du champ de vue. Les k signaux de métrologie bruts 76 sont utilisés en entrée d'une unité de génération, ou d'intégration, d'une métrologie synthétique par point de mesure 71.

L'unité d'intégration d'une métrologie synthétique par point de mesure 71 génère numériquement des signaux de métrologie synthétiques 77 pour chaque point de mesure, c'est-à-dire pour chaque pixel de la matrice 50, représentée par exemple sur la figure 5, dans le champ de vue observé par l'interféromètre 40. Les signaux de métrologie synthétiques générés 77 pour chaque point de mesure sont ensuite fournis à la chaîne de traitements de données 64.

La chaîne de traitement de données 64 récupère, également les interférogrammes sciences 401, tels que représentés sur la figure 4. La chaine de traitement de données 64 peut ensuite, selon le type d'interféromètre 40 ou son utilisation, effectuer par exemple un ré-échantillonnage des interférogrammes sciences sur une grille de métrologie fixe, puis faire une transformée de Fourier des données sciences, ou faire une compression par filtrage décimation, ou tout autre traitement de calibration radiométrique ou spectrale.

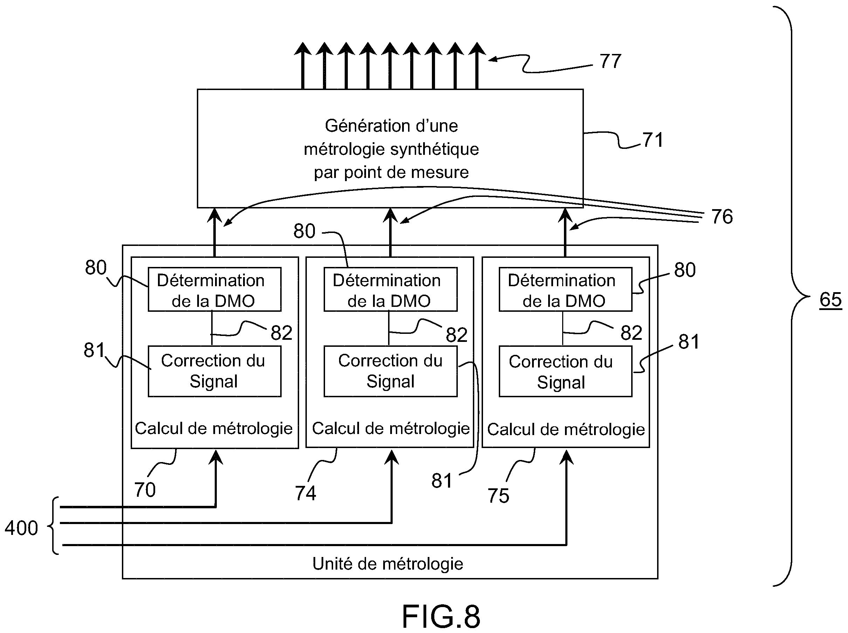

La figure 8 représente un exemple de différents traitements pouvant être réalisés par les unités de calcul de métrologie 70, 74, 75 et par l'unité de génération d'une métrologie synthétique par point de mesure 71, représentées sur la figure 7.

Les traitements réalisés par les unités de calcul de métrologie 70, 74, 75 sont relativement standard. Cette étape peut être réalisée sur les signaux laser bruts 400 analogiques ou après numérisation de ceux-ci. Pour cette étape, deux signaux en quadrature de phase pour chacun des k faisceaux laser 400, peuvent être utilisés. Les unités de calcul de métrologie 70, 74, 75 réalisent notamment chacune des étapes suivantes :

- une première étape de correction du signal 81 comportant une correction de décalage, offset en langage anglo-saxon, une correction d'amplitude, une correction d'éventuels déphasages entre les signaux en quadratures de phase ; des facteurs de calibration peuvent être éventuellement estimés régulièrement toutes les n acquisitions, n étant un entier à relier à la stabilité du phénomène physique à calibrer ;
- un module de calcul, non représenté sur la figure 8, permet de connaître le nombre de franges entièrement parcourues par rapport à la position de différence de marche nulle. Le nombre de franges peut être défini par :

nombre_de_franges = partie_entière (signal_metrologie_brut_absolue / λ)
où λ est la longueur d'onde du laser ;

Le nombre de franges peut par exemple être initialisé avec la méthode de Connes appliquée sur le signal science ; Puis un comptage du nombre de franges peut être effectué sur les signaux de métrologie brut 82 sortant de la correction du signal 81.

- une deuxième étape 80 de détermination de la différence de marche optique, ou DMO, de chaque signal par application de la fonction arc sinus ou arc cosinus, permet d'obtenir une mesure de DMO relative, laquelle combinée au nombre de franges, produit les signaux de métrologie bruts 76 correspondant à une DMO absolue :

$$\text{signal\_metrologie\_brut\_relative} = \arccos(\text{signal\_laser\_corrigé}) \text{ ou}$$
$$\arcsin(pi/2 - \text{signal\_laser\_corrigé}),$$

et,

$$\text{signal\_metrologie\_brut\_absolue} = \text{nombre\_de\_frange} * \lambda + \text{signal\_metrologie\_brut\_relative}.$$

Les unités de calcul de métrologie 70, 74, 75 fournissent donc, tel que représenté sur la figure 8 pour l'exemple, k signaux de métrologie bruts 76. Les k signaux de métrologie bruts 76 sont ensuite utilisés par l'unité de génération d'une métrologie synthétique par point de mesure 71 pour calculer la différence de marche optique applicable en chaque point de mesure par exemple de la matrice 50.

Dans un premier temps, l'unité d'intégration dans le champ de vue 71 estime un vecteur dit apex, c'est-à-dire le vecteur joignant le sommet des deux coins de cube 2,3 de l'interféromètre 40, lesdits coins de cube 2, 3 étant tous deux projetés dans un même espace image. Autrement dit, sur les figures 1, 2, 3, 4, le vecteur apex est le vecteur qui relie le sommet du retro-réflecteur 3 au symétrique du sommet du rétro-réflecteur 2 par rapport à la lame séparatrice 4. L'estimation du vecteur apex, détaillée ci-après utilise k signaux de métrologie bruts 76. Ensuite, la composante linéaire du vecteur apex est supprimée. Puis l'unité de génération d'une métrologie synthétique par point de mesure 71 estime une différence de marche optique pour chaque point de mesure.

Les calculs réalisés par l'unité de génération d'une métrologie synthétique par point de mesure 71 sont détaillés ci-après.

Soit les vecteurs d'injection de chacun des k faisceaux laser 400 $\psi$L1, $\psi$L2, ...$\psi$Lκ, formant la 3xk-matrice suivante :

$$\Psi\text{laser} = [\psi\text{L1} \; \psi\text{L2} \; ... \; \psi\text{Lκ}] \quad (1000)$$

Soit le vecteur apex colonne à chaque instant 't'

$$CC(t) = [CCx(t) \; CCy(t) \; CCz(t)]^T \quad (1001)$$

La différence de chemin optique pour chaque instant 't' est donnée par l'équation suivante :

$$OPDlaser(t) = 2.CC^T(t). \Psi\text{laser} \quad (1002)$$

où

$$OPDlaser(t) = [OPDlaser1(t) \; OPDlaser2(t) \; ... \; OPDlaserk(t)]^T \quad (1003)$$

avec OPDlaser1 (t), OPDlaser2(t),..., OPDlaserk(t) représentant les différences de chemins optiques respectivement des k faisceaux laser 400. En outre, l'unité de calcul métrologique 70 produit et fournit un vecteur ligne de mesure :

$$mOPDlaser(t) = [mOPDlaser1(t)\ mOPDlaser2(t)\ ...\ mOPDlaserk(t)]\ (1004)$$

En utilisant l'équation (1002), on peut déduire une estimation du vecteur apex donnée par l'équation suivante :

$$eCC(t) = 0.5 * mOPDlaser(t)\ .\ [e\Psi laser]^{-1}\qquad (1005)$$

dans laquelle e$\Psi$laser est une estimation de $\Psi$laser et $[e\Psi laser]^{-1}$ est le pseudo inverse de e$\Psi$laser.

Ensuite la composante linéaire de eCC est extraite par la relation suivante :

$$eCCcor(t) = eCC(t) - eCCx(t)*[0\ eCenterOfFringesY\ eCenterOfFringesZ]$$
$$(1006)$$

où [eCenterOfFringesY eCenterOfFringesZ] est une estimation de la coordonnée angulaire du centre des franges. Cette estimation peut être faite par exemple par régression linéaire sur le vecteur CC(t).

Soit $\psi$P1, $\psi$P2, .... et $\psi$PN les vecteurs positions de champs, ou les coordonnées angulaires de N points de mesure dans le champ de vue de l'interféromètre 40, par exemple, formant la 3xN-matrice suivante :

$$\Psi sounding = [\psi P1\ \psi P2\ ...\ \psi PN]\quad (1007)$$

Donc en utilisant (1002) et (1005), le signal de métrologie pour chaque point de sondage à un instant 't', est estimé par :

$$eOPDsounding(t)\quad = 2 * eCCcor(t) * e\Psi sounding\qquad (1008)$$

On obtient ainsi une métrologie en chaque point de mesure du champ de vue.

*Avantages*

Un des avantages de l'invention est de générer une métrologie qui intègre la trajectoire dans l'espace des éléments mobiles de l'interféromètre, et permet ainsi d'en compenser les défauts : en effet, le système de métrologie selon l'invention génère des différences de marche des signaux laser dans le champ de l'interféromètre intégrant des dérives ou vibrations éventuelles du mécanisme de déplacement du ou des éléments mobiles de l'interféromètre. Le système selon l'invention est également robuste vis-à-vis d'une dérive des angles d'injection des lasers.

Avantageusement, le système de métrologie selon l'invention permet de corriger toutes les composantes de l'erreur de trajectoire : offset de trajectoire, composante parabolique, effet vibratoire.

Le système selon l'invention permet notamment de conserver une longueur d'onde apparente laser stable vis à vis de l'injection laser.

L'invention a également pour avantage de pouvoir intégrer une compensation d'un effet peau de tambour de la lame séparatrice.

Avantageusement, le procédé selon l'invention comporte des traitements numériques peu complexes permettant un traitement en temps réel des signaux.

L'utilisation du système de métrologie selon l'invention dans un interféromètre permet d'obtenir une très grande précision dans les mesures de l'interféromètre avec une bande passante sans limite, et aucun retard.

**Revendications**

**1.** Système de métrologie comportant un interféromètre d'analyse à distance d'un composé gazeux par spectroscopie à transformée de Fourier (40), ledit interféromètre (40) étant un interféromètre à deux bras, comportant au moins un retro-réflecteur mobile (3) et ayant un champ de vue dans lequel est vu le composé gazeux, le système de métrologie comportant en plus au moins :

• un sous-système d'injection (45) d'au moins trois faisceaux laser de métrologie (41) dans l'interféromètre (40), les au moins trois faisceaux laser étant répartis dans le champ de vue de l'interféromètre et les trois positions d'injection étant éloignées les unes des autres ;

• un sous-système d'acquisition (48, 49) des au moins trois faisceaux laser de métrologie (42) en sortie de l'interféromètre (40), ledit sous-système d'acquisition (48, 49), fournissant au moins trois signaux laser (400) représentant chacun une mesure d'interférence d'un faisceau laser de métrologie (41) après son passage dans l'interféromètre (40) ;

• au moins une unité de métrologie (65) comportant au moins trois unités de calcul de métrologie (70, 74, 75) estimant, pour chaque faisceau laser acquis (42) une différence de marche optique absolue associée au signal laser correspondant et au point de mesure correspondant et calculant, pour chaque faisceau laser acquis (42) un signal de métrologie brut (76) à partir du signal laser (400), et une unité de génération d'une métrologie synthétique par point de mesure (71) qui, à partir des signaux de métrologie brut (76),génère numériquement un signal de métrologie synthétique (77) pour chaque point de mesure associé du champ de vue de l'interféromètre (40), les signaux de métrologie synthétiques (77) ainsi générés tenant compte de la trajectoire du rétro-réflecteur mobile (3) dans l'espace ;

• le rétro-réflecteur mobile ayant la forme d'un coin de cube et l'unité de génération d'une métrologie synthétique par point de mesure (71) effectuant au moins les traitements suivants :

  ◦ estimation d'un vecteur Apex joignant les positions des sommets du rétro-réflecteur mobile (3) ;
  ◦ suppression de la composante linéaire du vecteur Apex ;
  ◦ génération d'au moins une différence de marche optique représentée par un signal de métrologie synthétique (77), en un point du champ de vue, à partir du vecteur Apex et de coordonnées angulaires dudit point du champ de vue.

2. Système de métrologie selon la revendication 1, dans lequel un des trois faisceaux laser (41) est injecté au centre du champ de vue de l'interféromètre (40).

3. Système de métrologie selon la revendication 2, dans lequel une unité de calcul de métrologie (70, 74, 75) effectue au moins le traitement suivant :

  • correction (81) du signal laser (400) : correction des différences d'amplitudes, de phase, et d'offset, offset signifiant décalage en langage anglo-saxon.

4. Procédé de métrologie appliqué à un interféromètre d'analyse à distance d'un composé gazeux par spectroscopie à transformée de Fourier (40), ledit interféromètre (40) étant un interféromètre à deux bras, comportant au moins un retro-réflecteur mobile (3) ayant la forme d'un coin de cube et ayant un champ de vue dans lequel est vu le composé gazeux, comportant au moins :

  • une étape d'injection d'au moins trois faisceaux laser de métrologie (41) dans l'interféromètre (40), les au moins trois faisceaux laser étant répartis dans le champ de vue de l'interféromètre en trois points de mesure différents ;
  • une étape d'acquisition d'au moins trois faisceaux laser de métrologie (42) en sortie de l'interféromètre (40) ;
  • une étape de génération d'au moins trois signaux laser (400) représentant chacun une mesure d'interférence d'un faisceau laser de métrologie (41) après son passage dans l'interféromètre (40) ;
  • une étape de calcul d'un signal de métrologie brut (76) pour chaque faisceau laser de métrologie (42) à partir du signal laser (400) injecté dans l'interféromètre.
  • une étape de génération d'un signal de métrologie synthétique (77) pour chaque point de mesure d'un champ de vue de l'interféromètre (40), les signaux de métrologie synthétiques (77) étant générés à partir des au moins trois signaux laser injectés (400) et en tenant compte de la trajectoire du ou des rétro-réflecteurs mobiles (3) dans l'espace; l'étape de génération de signaux de métrologie synthétique (77) comportant une estimation pour chaque faisceau laser acquis (42) d'une différence de marche optique absolue,
  • une étape de traitements dans laquelle l'unité de génération d'une métrologie synthétique par point de mesure (71) effectue au moins les traitements suivants :

    ◦ estimation d'un vecteur Apex joignant les positions des sommets du rétro-réflecteur mobile (3) ;
    ◦ suppression de la composante linéaire du vecteur Apex ;

  • génération d'au moins une différence de marche optique représentée par un signal de métrologie synthétique (77), en un point du champ de vue, à partir du vecteur Apex et de coordonnées angulaires dudit point du champ de vue.

**5.** Procédé selon la revendication 4, dans lequel un des trois faisceaux laser (41) est injecté au centre du champ de vue de l'interféromètre (40).

**6.** Procédé de métrologie selon la revendication 4, dans lequel le calcul d'un signal de métrologie brut (76) comporte au moins le traitement suivant :

 • correction (81) du signal laser injecté (400) : correction des différences d'amplitudes, de phase, et d'offset, offset signifiant décalage en langage anglo-saxon.

**Patentansprüche**

**1.** Messsystem mit einem Interferometer zum Fernanalysieren einer gasförmigen Verbindung durch Fourier-Transformationsspektroskopie (40), wobei das Interferometer (40) ein zweiarmiges Interferometer ist, das mindestens einen mobilen Retroreflektor (3) beinhaltet und ein Sichtfeld hat, in dem die gasförmige Verbindung gesehen wird, wobei das Messsystem ferner mindestens Folgendes beinhaltet:

 • ein Subsystem (45) zum Einkoppeln von mindestens drei Messlaserstrahlen (41) in das Interferometer (40), wobei die mindestens drei Laserstrahlen im Sichtfeld des Interferometers verteilt und die drei Einkoppelpositionen voneinander beabstandet sind;
 • ein Subsystem (48, 49) zum Erfassen der mindestens drei Messlaserstrahlen (42) am Ausgang des Interferometers (40), wobei das Erfassungssubsystem (48, 49) mindestens drei Lasersignale (400) liefert, die jeweils eine Interferenzmessung eines Messlaserstrahls (41) nach seinem Durchgang durch das Interferometer (40) darstellen;
 • mindestens eine Messeinheit (65), die mindestens drei Messrecheneinheiten (70, 74, 75) beinhaltet, die für jeden erfassten Laserstrahl (42) eine absolute optische Schrittdifferenz schätzen, die mit dem entsprechenden Lasersignal und dem entsprechenden Messpunkt assoziiert ist, und für jeden erfassten Laserstrahl (42) ein rohes Messsignal (76) aus dem Lasersignal (400) berechnen, und eine Einheit zum Erzeugen einer synthetischen Messung pro Messpunkt (71), die aus den rohen Messsignalen (76) digital ein synthetisches Messsignal (77) für jeden assoziierten Messpunkt im Sichtfeld des Interferometers (40) erzeugt, wobei die so erzeugten synthetischen Messsignale (77) den Weg des im Raum mobilen Retroreflektors (3) berücksichtigen;
 • wobei der mobile Retroreflektor die Form eines Würfelecks hat und die Einheit zum Erzeugen eines synthetischen Messsignals pro Messpunkt (71) mindestens die folgenden Verarbeitungen durchführt:

  ◦ Schätzen eines Apex-Vektors, der die Positionen der Scheitelpunkte des mobilen Retroreflektors (3) verbindet;
  ◦ Entfernen der linearen Komponente des Apex-Vektors;
  ◦ Erzeugen mindestens einer optischen Schrittdifferenz, die durch ein synthetisches Messsignal (77) repräsentiert wird, an einem Punkt des Sichtfeldes aus dem Apex-Vektor und den Winkelkoordinaten des Sichtfeldpunktes.

**2.** Messsystem nach Anspruch 1, wobei einer der drei Laserstrahlen (41) in der Mitte des Sichtfeldes des Interferometers (40) eingekoppelt wird.

**3.** Messsystem nach Anspruch 2, wobei eine Messrecheneinheit (70, 74, 75) mindestens die folgende Verarbeitung durchführt:

 • Korrigieren (81) des Lasersignals (400): Korrigieren der Unterschiede in Amplitude, Phase und Offset, wobei Offset im Englischen Versatz bedeutet.

**4.** Messverfahren, angewandt auf ein Interferometer zum Fernanalysieren einer gasförmigen Verbindung durch Fourier-Transformationsspektroskopie (40), wobei das Interferometer (40) ein zweiarmiges Interferometer ist, das mindestens einen mobilen Retroreflektor (3) beinhaltet, der die Form eines Würfelecks hat und ein Sichtfeld aufweist, in dem die gasförmige Verbindung gesehen wird, das mindestens Folgendes beinhaltet:

• einen Schritt des Einkoppelns von mindestens drei Messlaserstrahlen (41) in das Interferometer (40), wobei die mindestens drei Laserstrahlen im Sichtfeld des Interferometers an drei verschiedenen Messpunkten verteilt sind;

• einen Schritt des Erfassens von mindestens drei Messlaserstrahlen (41) am Ausgang des Interferometers (40);

• einen Schritt des Erzeugens von mindestens drei Lasersignalen (400), die jeweils eine Interferenzmessung eines Messlaserstrahls (41) nach dessen Durchgang durch das Interferometer (40) darstellen;

• einen Schritt des Berechnens eines rohen Messsignals (76) für jeden Messlaserstrahl (42) aus dem in das Interferometer (40) eingekoppelten Lasersignal (400);

• einen Schritt des Erzeugens eines synthetischen Messsignals (77) für jeden Messpunkt eines Sichtfeldes des Interferometers (40), wobei die synthetischen Messsignale (77) aus den mindestens drei eingekoppelten Lasersignalen (400) und unter Berücksichtigung des Wegs des oder der mobilen Retroreflektors/-en (3) im Raum erzeugt werden; der Schritt des Erzeugens synthetischer Messsignale (77) eine Schätzung einer absoluten optischen Schrittdifferenz für jeden erfassten Laserstrahl (42) beinhaltet,

• einen Verarbeitungsschritt, in dem die Erzeugungseinheit eines synthetischen Messsignals pro Messpunkt (71) mindestens die folgenden Verarbeitungen durchführt:

  ◦ Schätzen eines Apex-Vektors, der die Positionen der Scheitelpunkte des mobilen Retroreflektors (3) verbindet;
  ◦ Entfernen der linearen Komponente des Apex-Vektors;

• Erzeugen mindestens einer optischen Schrittdifferenz, die durch ein synthetisches Messsignal (77) repräsentiert wird, an einem Punkt des Sichtfeldes aus dem Apex-Vektor und den Winkelkoordinaten des Sichtfeldpunktes.

5. Verfahren nach Anspruch 4, wobei einer der drei Laserstrahlen (41) im Zentrum des Sichtfeldes des Interferometers (40) eingekoppelt wird.

6. Messverfahren nach Anspruch 4, bei dem das Berechnen eines rohen Messsignals (76) mindestens die folgende Verarbeitung beinhaltet:

• Korrigieren (81) des injizierten Lasersignals (400): Korrigieren der Unterschiede in Amplitude, Phase und Offset, wobei Offset im Englischen Versatz bedeutet.

**Claims**

1. A metrology system containing an interferometer for remote analysis of a gaseous compound by Fourier transform spectroscopy (40), said interferometer (40) being a two-arm interferometer containing at least one movable retroreflector (3) and having a field of view in which the gaseous compound is viewed, the metrology system further containing at least:

• a sub-system (45) for injecting at least three metrology laser beams (41) into the interferometer (40), the at least three laser beams being distributed in the field of view of the interferometer and the three injection positions being spaced apart from each other;

• a sub-system (48, 49) for acquiring the at least three metrology laser beams (42) output from the interferometer (40), said acquisition sub-system (48, 49) supplying at least three laser signals (400) each representing an interference measurement of a metrology laser beam (41) after its passage through the interferometer (40);

• at least one metrology unit (65) containing at least three metrology computation units (70, 74, 75) estimating, for each acquired laser beam (42), an absolute optical path difference associated with the corresponding laser signal and with the corresponding measurement point, and computing, for each acquired laser beam (42), a raw metrology signal (76) on the basis of the laser signal (400), and a unit for generating a synthetic metrology reading per measurement point (71), which unit, on the basis of the raw metrology signals (76), digitally generates a synthetic metrology signal (77) for each measurement point associated with the field of view of the interferometer (40), the synthetic metrology signals (77) thus generated taking into account the trajectory of the movable retroreflector (3) in space;

• the movable retroreflector having the form of a corner-cube and the unit for generating a synthetic metrology reading per measurement point (71) performing at least the following processes:

○ estimating an apex vector connecting the positions of the vertices of the movable retroreflector (3);
○ removing the linear component of the apex vector;
○ generating at least one optical path difference represented by a synthetic metrology signal (77), at a point of the field of view, from the apex vector and angular coordinates of said point of the field of view.

2. The metrology system according to claim 1, wherein one of the three laser beams (41) is injected into the centre of the field of view of the interferometer (40).

3. The metrology system according to claim 2, wherein a metrology computation unit (70, 74, 75) performs at least the following process:

• correcting (81) the laser signal (400): correcting the differences in amplitudes, phase and offset.

4. A metrology method applied to an interferometer for remote analysis of a gaseous compound by Fourier transform spectroscopy (40), said interferometer (40) being a two-arm interferometer containing at least one movable retroreflector (3) having the form of a corner-cube and having a field of view in which the gaseous compound is viewed, said method containing at least:

• a step of injecting at least three metrology laser beams (41) into the interferometer (40), the at least three laser beams being distributed in the field of view of the interferometer at three different measurement points;
• a step of acquiring at least three metrology laser beams (42) output from the interferometer (40);
• a step of generating at least three laser signals (400) each representing an interference measurement of a metrology laser beam (41) after its passage through the interferometer (40);
• a step of computing, for each metrology laser beam (42), a raw metrology signal (76) from the laser signal (400) injected into the interferometer;
• a step of generating a synthetic metrology signal (77) for each measurement point of a field of view of the interferometer (40), the synthetic metrology signals (77) being generated from the at least three injected laser signals (400) and taking into account the trajectory of the one or more movable retroreflector(s) (3) in space; the step of generating synthetic metrology signals (77) containing an estimate, for each acquired laser beam (42), of an absolute optical path difference;
• a processing step, in which the unit (71) for generating a synthetic metrology reading per measurement point performs at least the following processes:

○ estimating an apex vector connecting the positions of the vertices of the movable retroreflector (3);
○ removing the linear component of the apex vector;

• generating at least one optical path difference represented by a synthetic metrology signal (77), at a point of the field of view, from the apex vector and of angular coordinates of said point of the field of view.

5. The method according to claim 4, wherein one of the three laser beams (41) is injected into the centre of the field of view of the interferometer (40).

6. The metrology method according to claim 4, wherein the computation of a raw metrology signal (76) containing at least the following process:

• correcting (81) the injected laser signal (400): correcting the differences in amplitudes, phase and offset.

FIG.1

EP 2 500 701 B1

FIG.2

EP 2 500 701 B1

**FIG.3**

EP 2 500 701 B1

FIG.4

Dispositif optique

FIG.5

EP 2 500 701 B1

FIG.6

EP 2 500 701 B1

FIG.7

FIG.8

EP 2 500 701 B1

# EP 2 500 701 B1

## RÉFÉRENCES CITÉES DANS LA DESCRIPTION

**Documents brevets cités dans la description**

- US 5657122 A

**Littérature non-brevet citée dans la description**

- tilt-compensated interferometers. **PETER R. GRIFFITHS ; JAMES A. DE HASETH.** FOURIER TRANSFORM INFRARED SPECTROMETRY. 2007, 112-123